# FASCICULE DE BREVET EUROPEEN

(11) **EP 4 094 003 B1**
(45) Date de publication et mention de la délivrance du brevet: **03.01.2024**
(21) Numéro de dépôt: 21704869.3
(22) Date de dépôt: 12.01.2021
(51) Int. Cl.: F16L 37/088, F16L 33/22, F16L 37/092

(54) **DISPOSITIF DE RACCORDEMENT D'UN ÉLÉMENT TUBULAIRE**
VORRICHTUNG ZUM VERBINDEN EINES ROHRFÖRMIGEN ELEMENTS
DEVICE FOR CONNECTING A TUBULAR ELEMENT

(30) Priorité: 20.01.2020 FR 2000539
(43) Date de publication de la demande: 30.11.2022
(73) Titulaire: A. Raymond et Cie, 38000 Grenoble (FR)
(72) Inventeur: RAT, Julien, 38140 LE RIVIER D'APPRIEU (FR); CHAUPIN, Jérôme, 38830 CRET EN BELLEDONNE (FR); DEPLAN, Anaïs, 38640 CLAIX (FR)
(74) Mandataire: IP Trust
(86) Numéro de dépôt international: PCT/FR2021/050048
(87) Numéro de publication internationale: WO 2021/148737

(56) Documents cités:
- WO-A1-2018/224588
- US-A1- 2007 296 214

## Description

### DOMAINE DE L'INVENTION

La présente invention concerne le domaine des dispositifs de raccordement et de connexion pour permettre une communication fluidique étanche entre des tuyaux ou conduits, notamment pour les véhicules automobiles. Elle concerne en particulier un raccord de connexion fluidique comprenant un témoin de bon montage.

### ARRIERE PLAN TECHNOLOGIQUE DE L'INVENTION

Dans le domaine des connecteurs fluidiques, il est souhaitable de disposer de dispositifs de raccordement de connexion rapides présentant des témoins de bon montage, permettant une confirmation du bon montage d'un tuyau dans le dispositif de raccordement.

Un dispositif de raccordement comprend généralement un corps sensiblement cylindrique délimitant un canal intérieur formant un logement de réception d'un tube. Le logement est pourvu de moyens pour y assujettir l'extrémité du tube de manière étanche, typiquement un organe d'accrochage tel qu'une bague métallique et un élément annulaire d'étanchéité de type joint annulaire. L'organe d'accrochage est chargé de maintenir l'élément tubulaire en place une fois inséré, tandis que le joint annulaire est agencé pour être comprimé entre une paroi du canal intérieur et l'élément tubulaire de manière à assurer une étanchéité entre ceux-ci.

Pour que les moyens d'étanchéité puissent assurer leur fonction de manière fiable et efficace, il est nécessaire que l'extrémité de l'élément tubulaire soit suffisamment enfoncée dans le canal intérieur pour atteindre l'organe d'accrochage et le joint annulaire d'étanchéité. A cette fin, il est courant de simplement prévoir dans le canal intérieur une butée contre laquelle l'extrémité de tube vient en appui lorsqu'elle est suffisamment enfoncée. L'opérateur chargé du raccordement sait que l'extrémité de l'élément tubulaire est suffisamment enfoncée s'il détecte l'arrivée en butée de l'extrémité de l'élément tubulaire. Cependant, l'effort d'enfoncement de l'élément tubulaire n'est pas linéaire et s'élève lorsqu'il s'agit de faire passer l'extrémité de l'élément tubulaire par l'organe d'accrochage et/ou le joint d'étanchéité, variable d'une opération de raccordement à une autre. Il arrive donc que l'opérateur se méprenne sur cet accroissement soudain de l'effort d'enfoncement et l'interprète comme l'arrivée en butée de l'extrémité de l'élément tubulaire. L'extrémité de l'élément tubulaire n'est alors pas suffisamment enfoncée, occasionnant un risque de fuite et/ou de désaccouplement de l'élément tubulaire.

Pour remédier à cet inconvénient, il a été imaginé de disposer dans le canal intérieur un élément de témoignage sonore d'un enfoncement prédéterminé de l'extrémité de l'élément tubulaire dans le canal intérieur. On connaît ainsi du document FR 3 065 050 un tel dispositif de raccordement à témoin sonore de connexion. Dans ce document, le témoin sonore annulaire se déforme, sous l'effet de l'insertion de l'élément tubulaire, produisant un signal sonore dans l'état déformé. Un témoin sonore est également décrit dans les documents EP 1 746 349, JP 2016-75308, JP 2016-75309 ou encore JP 2016-75387.

De tels témoins sonores présentent des inconvénients notamment lorsque les éléments tubulaires sont insérés à la chaîne dans les dispositifs de raccordements par des opérateurs. De telles tâches sont souvent accomplies dans des environnements bruyants tels que ceux d'une usine, ce qui peut empêcher l'opérateur d'entendre le déclenchement du signal sonore. De même, en cas de fatigue ou d'inattention, et en tout état de cause, l'opérateur peut ne pas entendre le signal sonore indiquant le bon montage, ce qui l'oblige à ré-enfoncer l'élément tubulaire ou bien à démonter la connexion et à la remonter jusqu'à entendre le signal. Cela entraîne pour l'opérateur une perte de temps et une fatigue supplémentaire.

Le document FR 3 021 089 a cherché à résoudre cette problématique en prévoyant que l'élément de témoignage sonore soit pourvu d'une épingle élastique agencée pour tressauter contre la surface de l'élément tubulaire afin d'émettre un signal sonore, si l'élément tubulaire est suffisamment enfoncé, simplement en pivotant l'élément tubulaire autour de son axe. Néanmoins, bien que ce dispositif permette à l'opérateur de répéter la vérification du bon montage de l'élément tubulaire simplement en pivotant son extrémité, il consiste toujours en la détection d'un signal sonore, nécessitant une attention particulière contraignante dans un environnement bruyant. En outre, il n'est parfois pas possible d'opérer une rotation du tube ou du raccord.

Les documents JP2016-75308, JP 2016-75309 et JP 2016-75387 décrivent également des dispositifs de raccordement comprenant un témoin visuel. Dans ces documents, l'élément tubulaire, en s'insérant dans le corps, pousse un témoin visuel coloré jusqu'à atteindre une butée. A cet endroit, le corps du dispositif de raccordement est transparent, permettant à l'opérateur de voir la présence du témoin visuel coloré, indicateur du bon montage de l'élément tubulaire.

Néanmoins, de tels témoins visuels nécessitent de pouvoir voir, depuis l'extérieur, l'intérieur du corps du dispositif de raccordement. Ce type de dispositif n'est donc pas adapté aux situations où le dispositif de raccordement est déjà connecté à un élément femelle auquel cas ce dernier, recouvrant en partie le dispositif de raccordement, peut masquer le témoin visuel. Dès lors, de tels dispositifs imposent de connecter l'élément tubulaire au dispositif de raccordement avant d'intégrer celui-ci à l'élément femelle, ce qui représente une contrainte.

Les documents EP 1 183 480 et EP 2 112 416 proposent des dispositifs de raccordement comportant des ouvertures de visualisation permettant de visualiser le bon montage de l'élément tubulaire. Toutefois, l'ouverture de visualisation étant présente en fin de course de l'élément tubulaire, de tels dispositifs peuvent être difficilement utilisables lorsque le dispositif de raccordement est déjà enveloppé par l'élément femelle.

On connaît en outre des documents EP 1 559 943 et EP 1 154 187 des dispositifs de raccordement comprenant un témoin visuel de bon montage, dans lequel l'insertion de l'élément tubulaire conduit à pousser un élément sur son chemin, tel qu'une bague de visualisation, qui, en se déformant, fait ressortir des indicateurs, visibles à l'extérieur du dispositif de raccordement. De la même façon que précédemment, ces configurations imposent que le témoin visuel soit disposé en fin de course de l'élément tubulaire, ce qui n'est pas pratique lorsque le dispositif de raccordement est intégré à l'élément femelle avant l'insertion de l'élément tubulaire.

On connaît du document US 2017/0321825 un dispositif de raccordement d'un élément tubulaire comprenant des témoins visuels de bon montage de l'élément tubulaire, dans lequel les témoins visuels sont constitués de marques disposées sur l'élément tubulaire. L'opérateur peut donc savoir si l'élément tubulaire est bien monté dès lors qu'une marque prédéterminée n'est plus visible. Un tel dispositif présente l'inconvénient d'incorporer le témoin visuel dans l'élément tubulaire et non dans le dispositif de raccordement, ce qui empêche l'utilisation d'éléments tubulaires standards et peut imposer à l'opérateur de couper précisément l'extrémité de l'élément tubulaire pour que le témoin visuel soit disposé à une distance connue de l'extrémité.

On connaît également du document EP 0 940 620 un dispositif de raccordement comprenant une douille de sertissage destinée à être déformée par l'insertion de l'élément tubulaire et au moins un indicateur disposé sur la douille de sertissage, l'indicateur se déplaçant radialement lorsque l'élément tubulaire est correctement emmanché dans le dispositif de raccordement. Ce type de témoin visuel présente l'inconvénient de n'être visible qu'au niveau de la fenêtre où est présent l'indicateur, ce qui contraint l'opérateur à orienter le dispositif de raccordement de manière à pouvoir voir l'indicateur. Une telle contrainte est peu pratique pour l'opérateur, et constitue également une perte de temps ainsi qu'une augmentation de la fatigue de ce dernier.

Le document EP 2 249 072 présente un dispositif de raccordement comprenant un témoin haptique de bon montage de l'élément tubulaire. Dans ce document, le canal intérieur est muni d'une butée contre laquelle l'élément tubulaire exerce une force jusqu'à la rupture de la butée, signe du bon enfoncement de l'élément tubulaire. Ce dispositif présente l'inconvénient de ne proposer qu'un contrôle haptique du bon montage de l'élément tubulaire. Un tel contrôle est parfois difficile à détecter pour un opérateur, notamment s'il utilise des gants, et ce d'autant plus que l'opérateur est dans un état de fatigue important. En outre, il est impossible pour l'opérateur de vérifier a *posteriori* le bon montage.

Le document FR 2 873 185 présente une cartouche d'implantation pour un raccord de tuyau destiné à prendre place dans un logement comportant un corps de forme générale cylindrique, avec une première ouverture reliée à un conduit, et muni de dents élastiques s'étendant radialement vers l'extérieur, inclinées par rapport à un plan radial vers une seconde ouverture prévue pour l'introduction d'un tuyau à raccorder, et destinées à être disposées de préférence au fond du logement. Un raccord instantané pour raccorder le tuyau à la cartouche, comprend un anneau élastique, avec des dents s'étendant radialement vers l'intérieur, venant en appui contre un épaulement ménagé à l'intérieur du corps de cartouche, une bague destinée à maintenir l'anneau élastique en position, et un joint d'étanchéité pour assurer l'étanchéité entre la surface extérieure du tuyau à raccorder et la surface intérieure du corps de la cartouche.

### OBJET DE L'INVENTION

La présente invention concerne une solution alternative à celles de l'état de la technique, et vise à remédier à tout ou partie des inconvénients précités. Elle concerne en particulier un dispositif de raccordement d'un élément tubulaire comportant un témoin visuel de bon montage de l'élément tubulaire, simple à mettre en oeuvre et à vérifier et utilisable même lorsque le dispositif de raccordement est déjà intégré à un élément femelle.

### BREVE DESCRIPTION DE L'INVENTION

En vue de la réalisation de ce but, l'objet de l'invention propose un dispositif de raccordement d'un élément tubulaire comprenant :
- un corps creux sensiblement cylindrique présentant un logement débouchant sur une ouverture, le logement présentant un premier cran ;
- une cartouche verrouillée dans le logement dans une première position, la cartouche dépassant de l'ouverture du corps creux dans la première position, la cartouche présentant une paroi extérieure, et une paroi intérieure délimitant un canal intérieur, le canal intérieur présentant une première extrémité formant une entrée pour recevoir l'élément tubulaire et une deuxième extrémité munie d'un obstacle, la cartouche comprenant en outre un premier organe de retenue porté par sa paroi extérieure et configuré pour s'emboîter élastiquement dans le premier cran, pour maintenir la cartouche dans la première position ;
- un joint d'étanchéité annulaire disposé dans le canal intérieur,
- une bague d'accrochage disposée dans le canal intérieur, entre l'entrée et le joint d'étanchéité, pour assujettir de manière étanche l'élément tubulaire dans le canal intérieur.

Le dispositif de raccordement comprend en outre un système de déverrouillage configuré pour permettre, lorsque l'élément tubulaire, inséré dans le canal intérieur, exerce une force contre l'obstacle, le déverrouillage de la cartouche et son déplacement de la première position à une deuxième position, dans laquelle la cartouche est entièrement intégrée dans le corps creux.

Selon d'autres caractéristiques avantageuses et non limitatives de l'invention, prises seules ou selon toute combinaison techniquement réalisable :
- l'obstacle est formé par un élément flexible qui subit une déformation lorsque l'élément tubulaire, inséré dans le canal intérieur, exerce une force contre ledit obstacle ;
- le logement du corps creux présente un deuxième cran et la cartouche comprend un deuxième organe de retenue configuré pour s'emboîter élastiquement dans le deuxième cran, dans la deuxième position ;
- le premier et le deuxième organes de retenue forment un seul et même organe de retenue ;
- le système de déverrouillage comprend l'organe de retenue et le premier cran, l'organe de retenue et le premier cran étant alors configurés pour que la force minimale nécessaire, lors de l'insertion de l'élément tubulaire pour libérer l'organe de retenue du premier cran soit supérieure à la force nécessaire pour assujettir de manière étanche l'élément tubulaire dans le canal intérieur ;
- la cartouche comprend un organe tubulaire interne formant avec la paroi intérieure le canal intérieur tubulaire ;
- le logement du corps creux présente un épaulement, et le système de déverrouillage comprend l'épaulement et comprend au moins une patte flexible portée par l'organe tubulaire et formant l'obstacle, la patte flexible s'étendant obliquement dans le canal intérieur, de manière à rétrécir progressivement ledit canal dans une direction d'insertion, et se terminant par un ergot, l'ergot étant en butée contre l'épaulement lorsque la cartouche est dans la première position, la force exercée contre la patte flexible par l'élément tubulaire permettant la libération de l'ergot et le déverrouillage de la cartouche ;
- le système de déverrouillage comprend une pluralité de pattes flexibles angulairement réparties de manière régulière ;
- le corps creux comporte un organe tubulaire interne, du côté opposé à son ouverture ;
- la cartouche comprend un embout flexible de restriction configuré pour réduire le diamètre du canal intérieur à la deuxième extrémité, et pour venir en butée contre l'organe tubulaire interne lorsque la cartouche est dans la première position ;
- le système de déverrouillage comprend l'embout flexible de restriction qui forme l'obstacle, et l'organe tubulaire interne ;
- la paroi intérieure est munie d'un troisième cran entre l'entrée et la bague d'accrochage, et le dispositif de raccordement comprend un anneau de maintien de forme sensiblement cylindrique et inséré dans la cartouche, l'anneau de maintien présentant un troisième organe de retenue configuré pour s'emboîter élastiquement dans le troisième cran et pour maintenir la bague d'accrochage dans le canal intérieur ;
- le canal intérieur est muni d'un deuxième joint d'étanchéité annulaire disposé entre l'entrée et la bague d'accrochage ;
- la bague d'accrochage présente une section intérieure effilée pour griffer l'élément tubulaire lors de son insertion et empêcher son retrait ;
- la bague d'accrochage est en métal, préférentiellement en laiton ;
- la bague d'accrochage présente une forme de C ;
- la paroi extérieure de la cartouche est munie d'un troisième joint d'étanchéité annulaire pour assurer une étanchéité entre la cartouche et le corps creux ;
- le (s) joint(s) d'étanchéité annulaire (s) est (sont) en caoutchouc.

### BREVE DESCRIPTION DES FIGURES

D'autres caractéristiques et avantages de l'invention ressortiront de la description détaillée de l'invention qui va suivre en référence aux figures annexées sur lesquels :
[Fig. 1] La figure 1 représente une vue éclatée d'un dispositif de raccordement et d'un élément tubulaire selon l'invention ;
[Fig. 2a] La figure 2a représente une vue en coupe latérale d'un dispositif de raccordement selon l'invention lorsque la cartouche est en première position.
[Fig. 2b] La figure 2b représente une vue en coupe latérale d'un dispositif de raccordement selon l'invention lorsque la cartouche est en deuxième position.
[Fig. 3] La figure 3 représente une vue en coupe latérale d'un dispositif de raccordement conforme à l'invention, lorsque la cartouche est en première position.
[Fig. 4] La figure 4 représente une vue éclatée d'un dispositif de raccordement et d'un élément tubulaire conforme à l'invention.
[Fig. 5a] La figure 5a représente une cartouche d'un dispositif de raccordement selon un mode particulier de mise en oeuvre de l'invention.
[Fig. 5b]
[Fig. 5c]
[Fig. 5d]

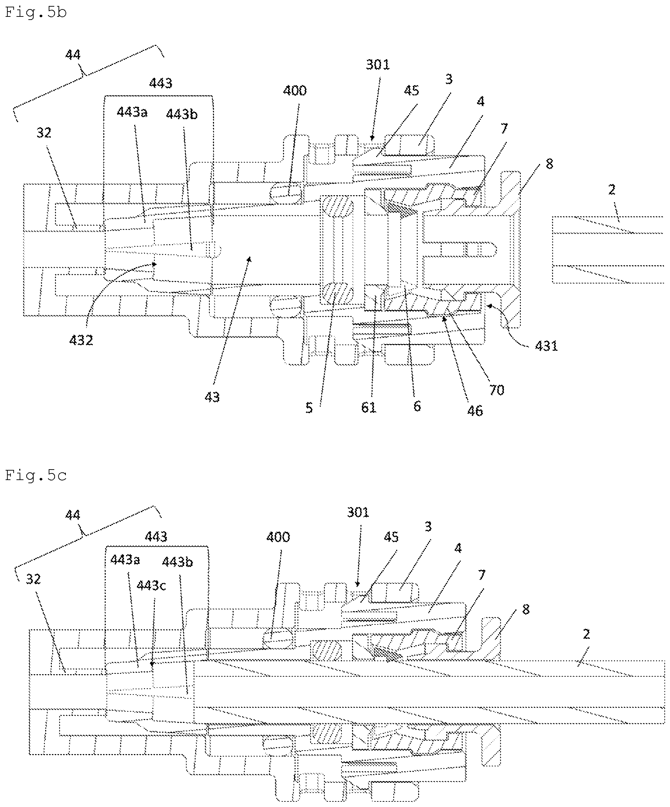

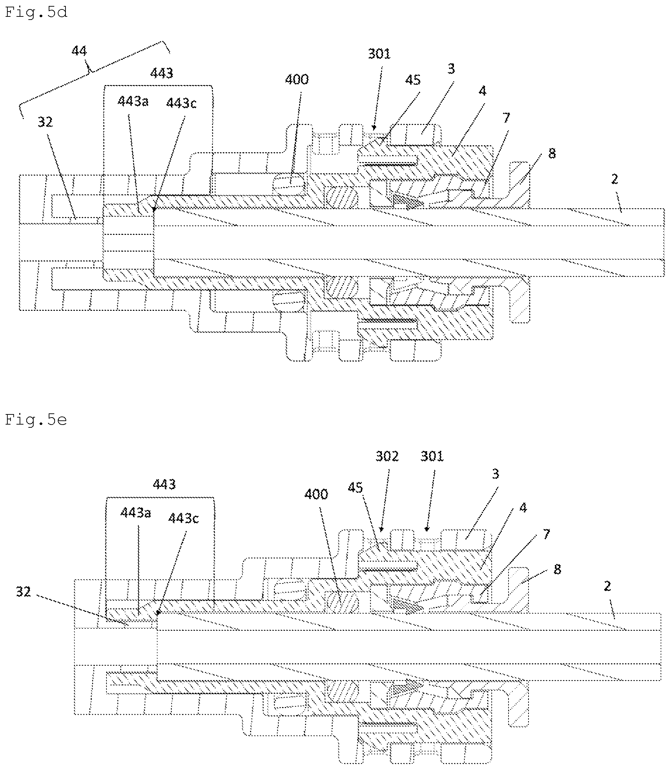

[Fig. 5e] Les figures 5b à 5e représentent un dispositif de raccordement selon un mode particulier de mise en oeuvre de l'invention, aux différents stades d'insertion de l'élément tubulaire, la cartouche étant dans la première position (5b, 5c, 5d) puis dans la deuxième position (5e).

### DESCRIPTION DETAILLEE DE L'INVENTION

Par souci de simplification de la description à venir, les mêmes références sont utilisées pour des éléments identiques ou assurant la même fonction dans les différents modes de mise en oeuvre de l'invention.

### Description générale du dispositif de raccordement

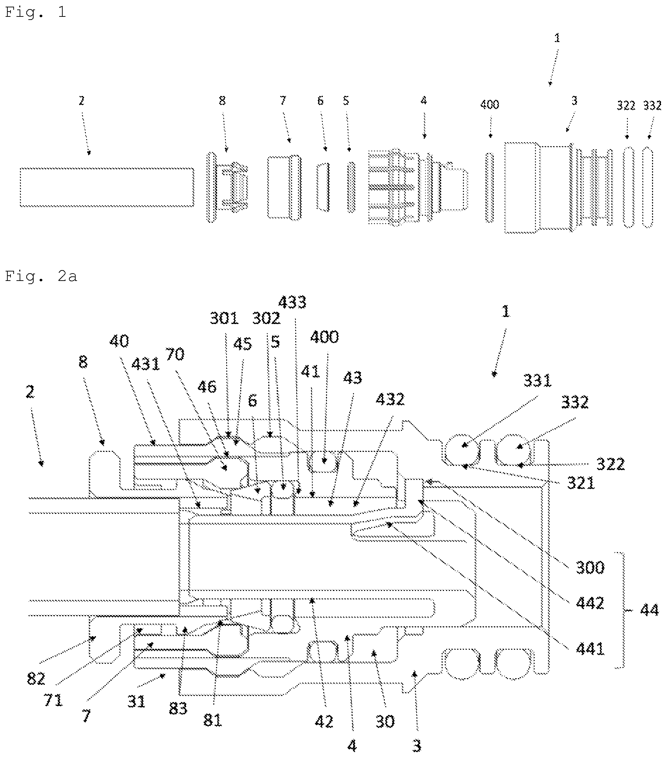

La figure 1 représente une vue éclatée d'un dispositif de raccordement conforme à l'invention.

D'une manière générale, le dispositif de raccordement 1 est destiné à raccorder fluidiquement, de manière démontable, un élément tubulaire 2 tel qu'un tube, un tuyau, un conduit, notamment en matière plastique, à un élément femelle (non représenté sur la figure). Le fluide peut être un liquide, tel que de l'eau, de l'huile, ou un gaz, tel que de l'air comprimé.

Un tel dispositif de raccordement 1 peut être utilisé dans le domaine automobile, notamment pour les voitures ou tout type de véhicules commerciaux tels que des autobus, autocars, camions, remorques ou semi-remorques, mais également dans le domaine ferroviaire ou aéronautique. En particulier, mais de manière non limitative, un dispositif de raccordement 1 conforme à l'invention peut être utilisé dans le cadre de freins à air, ou encore dans le cadre d'un circuit de refroidissement d'une batterie d'un véhicule électrique.

Revenant à la description de la figure 1, le dispositif de raccordement 1 comprend un corps creux 3 sensiblement cylindrique et une cartouche 4.

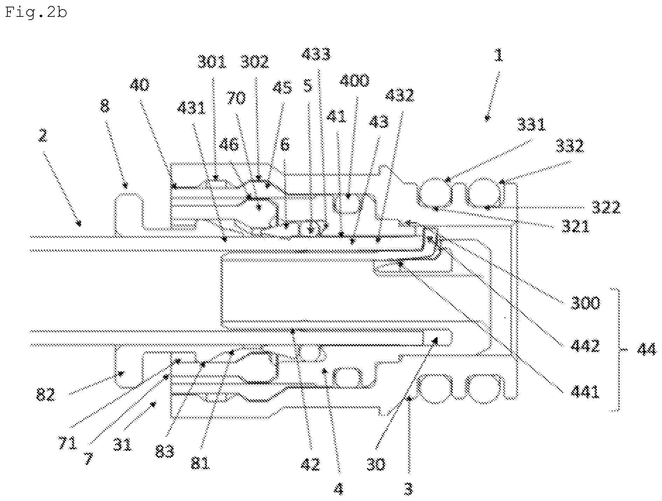

Les figures 2a et 2b représentent deux vues en coupe latérale d'un dispositif de raccordement 1 conforme à l'invention.

Comme cela est visible sur ces figures, le corps creux 3 présente un logement 30 débouchant sur une ouverture 31 pour y permettre l'insertion, dans une direction d'insertion, ainsi que le retrait de la cartouche 4.

La surface extérieure du corps creux 3 peut présenter une ou plusieurs rainures 321, 322 pour recevoir un ou plusieurs joints annulaires extérieurs 331, 332 afin d'assurer une étanchéité avec l'élément femelle lorsque le dispositif de raccordement 1 est intégré à l'élément femelle.

La cartouche 4, de forme sensiblement cylindrique, présente une paroi extérieure 40, conformée pour permettre l'insertion de la cartouche 4 à l'intérieur du logement 30 du corps creux 3 dans la direction d'insertion.

La paroi extérieure 40 de la cartouche 4 peut être munie d'un joint d'étanchéité annulaire 400 (ci-après désigné sous le terme de troisième joint d'étanchéité annulaire 400), de préférence en caoutchouc, permettant d'assurer une étanchéité entre la cartouche 4 et le corps creux 3. A cet effet, la paroi extérieure 40 peut présenter une rainure conformée pour recevoir le joint annulaire 400.

La cartouche 4 comprend en outre une paroi intérieure 41 délimitant un canal intérieur 43 destiné à recevoir l'élément tubulaire 2 inséré selon la direction d'insertion. A cet effet, le canal intérieur 43 présente une première extrémité 431 formant une entrée, ouverte, pour recevoir l'élément tubulaire 2, et une deuxième extrémité 432 munie d'un obstacle. Des modes de mise en oeuvre avantageux d'obstacles seront développés dans la suite de cette description.

Avantageusement, la cartouche 4 peut également comprendre un organe tubulaire 42 interne formant avec la paroi intérieure 41 le canal intérieur 43, alors tubulaire. En d'autres termes, le canal intérieur 43 est situé entre la paroi intérieure 41 de la cartouche et l'organe tubulaire 42. L'organe tubulaire 42 sert de guide à l'élément tubulaire 2 lors de l'insertion de ce dernier, ce qui est particulièrement utile lorsque l'élément tubulaire est formé d'un matériau souple.

L'organe tubulaire 42 peut être moulé de manière monobloc à la cartouche 4 ou solidairement fixée à celle-ci, par tout moyen de fixation connu, tel que le collage.

Lorsque l'élément tubulaire 2 n'est pas inséré, ou n'est pas suffisamment inséré, dans le canal intérieur 43 du dispositif de raccordement 1, la cartouche 4 se trouve dans une première position dans laquelle elle dépasse de l'ouverture 31, de telle sorte qu'une partie de la cartouche 4 est visible depuis l'extérieur. Cette situation est représentée sur la figure 2a. Afin de garantir une bonne visibilité de cette position, et permettre à un utilisateur de bien voir la cartouche 4 lorsqu'elle se trouve dans la première position, on peut prévoir que la cartouche 4 ait une couleur différente de celle du corps creux 3.

La cartouche 4 est verrouillée dans le logement 30 dans la première position. Par verrouillée dans le logement 30, on entend d'une part, que la cartouche 4 ne peut pas être extraite du logement 30 par l'application d'une simple force d'extraction dans le sens opposé à celui de son insertion dans le corps creux 3. A cet effet, et comme cela est bien visible sur la figure 2a, le logement 30 du corps creux 3 peut avantageusement présenter au moins un premier cran 301. La cartouche 4 peut comprendre au moins un premier organe de retenue 45 porté par sa paroi extérieure 40 et configuré pour s'emboîter élastiquement dans le premier cran 301 dans la première position de la cartouche 4. De la sorte, la cartouche 4 peut être maintenue fixement dans cette position tant qu'aucun effort ne lui est appliqué, mais également dans le cas où une force d'extraction volontaire ou accidentelle lui serait appliquée. Bien sûr d'autres moyens que le premier cran 301 et le premier organe de retenue 45 pourraient être envisagés pour verrouiller la cartouche 4 dans le sens d'une extraction. Notons également que, même si le premier cran 301 et le premier organe de retenue 45 sont illustrés respectivement comme un élément femelle et un élément mâle, ils pourraient à l'inverse correspondre respectivement à un élément mâle et à un élément femelle, dans une variante de réalisation.

Le verrouillage de la cartouche 4 dans le logement 30 se traduit d'autre part, par le fait que la cartouche 4 ne passe pas dans la deuxième position (c'est-à-dire, ne se déplace pas dans le sens de son insertion dans le corps 3) tant que l'élément tubulaire 2 n'a pas été inséré suffisamment dans la cartouche 4 pour assurer son bon montage et l'étanchéité de l'assemblage.

Ainsi, le verrouillage de la cartouche 4 permet de garantir que la cartouche 4 dépasse du corps creux 3 et demeure visible de l'extérieur lorsque l'élément tubulaire 2 n'est pas inséré et tant qu'il n'est pas suffisamment enfoncé. Plusieurs moyens de verrouillage seront détaillés dans la suite de cette description, notamment en référence à trois modes de mise en oeuvre particuliers et non limitatifs du dispositif de raccordement 1.

Le dispositif de raccordement 1 comprend en outre un joint d'étanchéité annulaire 5 disposé dans le canal intérieur 43. Un tel joint 5 permet de garantir l'étanchéité du dispositif 1 lorsque l'élément tubulaire 2 est inséré dans le canal intérieur 43, empêchant toute circulation de fluide dans le canal 43 autour de l'élément tubulaire 2.

Le dispositif de raccordement 1 comprend également une bague d'accrochage 6 disposée dans le canal intérieur 43, entre l'entrée 431 et le joint d'étanchéité 5, l'ensemble permettant d'assujettir de manière étanche l'élément tubulaire 2 dans le canal intérieur 43 (figure 2b). La bague d'accrochage 6 est pourvue de moyens d'accrochage de l'élément tubulaire 2 permettant d'empêcher ce dernier d'être extrait du canal intérieur 43 une fois inséré. A cet effet, la bague d'accrochage 6 peut avantageusement présenter une section intérieure effilée pour griffer l'élément tubulaire 2 lors de son insertion et empêcher son retrait, comme cela est représenté sur la figure 2b. Afin de garantir un accrochage efficace de l'élément tubulaire 2, notamment lorsque celui-ci est en matière plastique, la bague d'accrochage 6 peut être en métal, préférentiellement en laiton.

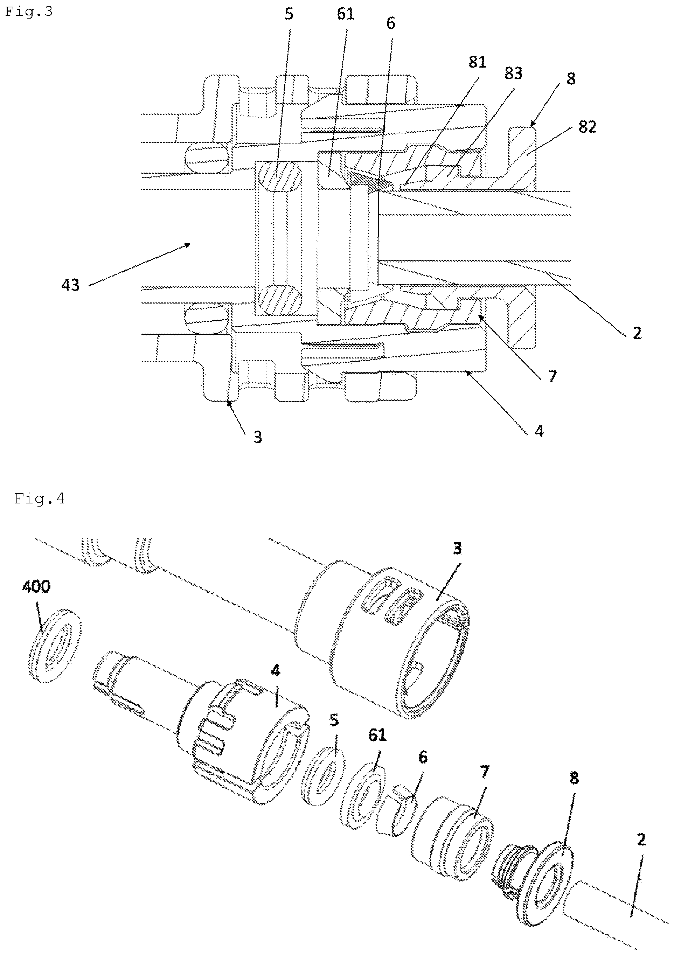

Avantageusement, une entretoise 61 peut être disposée entre la bague d'accrochage 6 et le joint d'étanchéité annulaire 5. Elle présente un profil tronconique du côté de la bague d'accrochage 6, qui tend à élargir sensiblement le diamètre de ladite bague 6 lorsque celle-ci est plaquée contre l'entretoise 61 : cette situation apparaît quand l'élément tubulaire 2 est inséré et arrive en contact avec la bague 6, comme cela est illustré sur la figure 3. Cet élargissement forcé de la bague 6 facilite l'insertion du tube 2.

Les diamètres du joint d'étanchéité annulaire 5 et de la bague d'accrochage 6 sont conformés pour permettre leur insertion dans le canal intérieur 43, mais également permettre l'assujettissement étanche de l'élément tubulaire 2 dans le canal 43. Notamment, ces diamètres peuvent être légèrement plus petits que le diamètre de l'élément tubulaire 2, pour imposer une légère déformation au joint 5 et à la bague 6 lors de l'insertion de l'élément tubulaire 2. Préférentiellement, les matériaux et/ou formes du joint 5 et de la bague 6 sont adaptés pour faciliter cette déformation. Ainsi, le joint d'étanchéité annulaire 5 est avantageusement formé dans un matériau élastique, tel que du caoutchouc. La bague d'accrochage 6 peut quant à elle présenter une forme de C, autrement dit consister en une bague fendue.

Le joint d'étanchéité annulaire 5 et la bague d'accrochage 6 peuvent avoir un diamètre légèrement supérieur au diamètre de la paroi intérieure 41 de la cartouche 4, nécessitant une légère compression pour les insérer dans le canal intérieur 43 et assurer leur maintien à l'intérieur du canal 43.

De manière particulièrement avantageuse, la paroi intérieure 41 peut être munie d'un troisième cran 46 entre l'entrée 431 et la bague d'accrochage 6. Le dispositif de raccordement 1 comprend alors un anneau de maintien 7, de forme sensiblement cylindrique, inséré dans la cartouche 4. L'anneau de maintien 7 présente un troisième organe de retenue 70 configuré pour s'emboîter élastiquement dans le troisième cran 46 et pour maintenir la bague d'accrochage 6 dans le canal intérieur 43. Ainsi, lorsque l'anneau de maintien 7 est emboîté dans la cartouche 4, il plaque la bague d'accrochage 6 contre le premier joint d'étanchéité annulaire 5 (ou contre l'entretoise 61, lorsque celle-ci est présente), lui-même pouvant être plaqué contre un épaulement 433 dont le canal intérieur 43 est avantageusement pourvu, afin d'immobiliser l'ensemble à l'intérieur du canal intérieur 43.

Le canal intérieur 43 peut être muni d'un deuxième joint d'étanchéité annulaire (non représenté sur les figures), préférentiellement en caoutchouc, disposé entre l'entrée 431 et la bague d'accrochage 6. Ce deuxième joint d'étanchéité, dénommé joint « cache-poussière », permet d'assurer la protection du canal intérieur 43 et notamment de la bague d'accrochage 6 par rapport à l'extérieur de la cartouche 4, empêchant notamment la poussière d'entrer dans le canal 43. Dans le cas où le dispositif de raccordement 1 comprend un anneau de maintien 7, le deuxième joint d'étanchéité est inséré entre la bague d'accrochage 6 et le troisième cran 46, de telle sorte que l'emboîtement de l'anneau de maintien 7 conduit à plaquer le deuxième joint d'étanchéité annulaire contre la bague d'accrochage 6.

Alternativement à la présence de ce deuxième joint d'étanchéité annulaire, et tel que cela est représenté notamment sur les figures 2a et 2b, le dispositif de raccordement peut comprendre un système d'extraction 8 de l'élément tubulaire 2. Le système d'extraction 8 présente une forme globalement cylindrique creuse, dont le diamètre est légèrement supérieur à celui de l'élément tubulaire 2 et de la bague d'accrochage 6 mais inférieur à celui de la paroi intérieure 41 de la cartouche 4. Cela permet au système d'extraction 8 d'être inséré dans le canal intérieur 43, et à l'élément tubulaire de traverser le système d'extraction 8 lors de son insertion dans le dispositif de raccordement 1.

Le système d'extraction 8 présente une première extrémité pointue 81, destinée à pénétrer dans le canal intérieur 43 selon la direction d'insertion, et une deuxième extrémité 82 formant une tête, plus large que l'entrée de la cartouche 4 et dépassant hors de celle-ci, pour permettre sa manipulation, de sorte que l'extrémité pointue 81 soit à distance de la bague d'accrochage 6 en dehors de l'utilisation du système d'extraction 8. La longueur du système d'extraction 8 selon la direction d'insertion est supérieure à la distance entre l'entrée de la cartouche 4 et la bague d'accrochage 6.

Pour permettre l'extraction de l'élément tubulaire 2, le système d'extraction 8 est enfoncé au moyen de sa tête 82 dans le canal intérieur 43, selon la direction d'insertion. L'extrémité pointue 81 s'insère alors entre l'élément tubulaire 2 et la bague d'accrochage 6, écartant légèrement la bague 6 et relâchant sa contrainte sur l'élément tubulaire 2, autorisant l'extraction de ce dernier.

Le système d'extraction 8 peut comprendre un ergot 83 destiné à être bloqué par un ergot complémentaire 71 de l'anneau de maintien 7, afin d'empêcher l'extraction du système d'extraction 8.

Quelles que soient la nature et la forme de ces éléments, le dispositif de raccordement 1 comprend également un système de déverrouillage. Lorsque l'élément tubulaire 2 est inséré dans le canal intérieur 43 et qu'il exerce une force contre l'obstacle situé au niveau de la deuxième extrémité 432 du canal 43, le système de déverrouillage est configuré pour permettre le déverrouillage de la cartouche 4 et son déplacement de la première position à une deuxième position. Dans cette deuxième position, la cartouche 4 est entièrement intégrée dans le corps creux 3 et ne dépasse plus de l'ouverture 31, comme cela est représenté sur la figure 2b.

De la sorte, le passage de la cartouche 4 de la première vers la deuxième position, aisément détectable visuellement par la disparition de la cartouche 4 à l'intérieur du corps creux 3, indique que l'élément tubulaire 2 a été correctement et suffisamment enfoncé dans le dispositif de raccordement 1, c'est-à-dire qu'il a dépassé la bague d'accrochage 6 et le joint d'étanchéité annulaire 5. En effet, il a nécessairement exercé une force contre l'obstacle situé au niveau de la deuxième extrémité 432, derrière le joint d'étanchéité annulaire 5 dans la direction d'insertion. Autrement dit, un dispositif de raccordement 1 conforme à l'invention permet de garantir le bon montage de l'élément tubulaire 2 par la simple détection visuelle de la disparition de la cartouche 4 à l'intérieur du corps creux 3. Cette disparition, qui est facile à constater dans tout environnement et entraîne une fatigue faible de la part de l'opérateur, peut être détectée même lorsque le dispositif de raccordement 1 est déjà connecté à l'élément femelle, et quelle que soit l'orientation du dispositif de raccordement 1.

Avantageusement, le logement 30 du corps creux 3 peut présenter un deuxième cran 302. La cartouche 4 peut comprendre un deuxième organe de retenue (non représenté), configuré pour s'emboîter élastiquement dans le deuxième cran 302 lorsque la cartouche se trouve dans la deuxième position.

Alternativement, le premier et le deuxième organes de retenue peuvent former un seul et même organe de retenue 45, tel que cela est représenté sur les figures 2a et 2b. Dans cette configuration avantageuse, l'organe de retenue 45 permet de verrouiller la cartouche 4 dans la première position ainsi que dans la seconde position, en coopérant respectivement avec le premier cran 301 et le deuxième cran 302.

### Premier mode de mise en oeuvre du dispositif de raccordement

Selon un premier mode de mise en oeuvre de l'invention, le logement 30 du dispositif de raccordement 1 comprend deux crans 301, 302 et un unique organe de retenue 45. Selon ce mode de mise en oeuvre, le système de déverrouillage comprend le premier cran 301 et l'organe de retenue 45.

Comme cela est bien connu en soi, la forme d'un cran, et notamment sa profondeur ou l'inclinaison de ses butées, permet de fixer la force minimale nécessaire pour libérer l'organe de retenue 45 hors de ce cran.

Dans ce premier mode de mise en oeuvre, la forme du premier cran 301 et de l'organe de retenue 45 sont ainsi configurées pour que, lors de l'insertion de l'élément tubulaire 2, la force minimale nécessaire pour libérer l'organe de retenue 45 du premier cran 301 soit supérieure à la force nécessaire pour assujettir de manière étanche l'élément tubulaire 2 dans le canal intérieur 43.

Pour le dire autrement, la profondeur du premier cran 301 et l'inclinaison de ses butées est ajustée de manière à s'assurer que l'insertion de l'élément tubulaire 2 permette dans un premier temps son passage à travers la bague d'accrochage 6, puis son passage à travers le joint d'étanchéité 5 tandis que la cartouche 4 demeure verrouillée en première position, la force n'étant pas suffisante pour libérer l'organe de retenue 45 du premier cran 301.

Dans un second temps, l'application par l'élément tubulaire 2 d'une force suffisante contre l'obstacle de la deuxième extrémité 432 du canal intérieur 43 entraîne la libération de l'organe de retenue 45, le déplacement de la cartouche 4 de la première vers la deuxième position, et l'emboîtement élastique de l'organe de retenue 45 dans le deuxième cran 302 pour verrouiller la cartouche 4 dans la deuxième position.

A cet effet, l'obstacle de la deuxième extrémité 432 peut consister en une simple butée pour recevoir l'application de la force de poussée par l'élément tubulaire 2 ayant déjà traversé la bague d'accrochage 6 et le joint d'étanchéité 5.

Un tel mode de mise en oeuvre permet bien de s'assurer que la cartouche 4 soit déverrouillée et passe de la première à la deuxième position une fois seulement que l'élément tubulaire a dépassé la bague d'accrochage 6 et le joint d'étanchéité 5.

### Deuxième mode de mise en oeuvre du dispositif de raccordement

Selon un deuxième mode de mise en oeuvre, préféré, de l'invention, représenté sur les figures 2a et 2b, la cartouche 4 comprend l'organe tubulaire 42 décrit précédemment. En outre, le logement 30 du corps creux 3 présente un épaulement 300.

Dans ce mode de mise en oeuvre, le système de déverrouillage 44 comprend l'épaulement 300, et au moins une patte flexible 441 portée par l'organe tubulaire 42 et formant l'obstacle. Plus précisément, la patte flexible 441 s'étend obliquement dans le canal intérieur 43, de manière à rétrécir progressivement le canal 43 après le joint d'étanchéité annulaire 5 dans la direction d'insertion. La patte flexible 441 se termine par un ergot 442 qui s'étend radialement vers l'extérieur par rapport à la direction d'insertion. Cet ergot 442 se trouve en butée contre l'épaulement 300 lorsque la cartouche 4 est dans la première position. La coopération entre l'ergot 442 en bout de la patte flexible 441 et l'épaulement 300 induit le verrouillage de la cartouche 4 dans la première position, empêchant son déplacement, selon la direction d'insertion, dans la deuxième position.

La force exercée contre la patte flexible 441 par l'élément tubulaire 2 a pour effet d'écarter progressivement la patte flexible 441 de la paroi intérieure 41 de la cartouche 4 pour l'aligner progressivement selon la direction d'insertion. Cet écartement de la patte flexible 441 permet la libération de l'ergot 442 de l'épaulement 300, et donc le déverrouillage de la cartouche 4. La force exercée par l'élément tubulaire 2 contre l'ergot 442, qui forme alors une butée, permet ensuite le déplacement de la cartouche 4 selon la direction d'insertion, jusqu'à la deuxième position dans laquelle la cartouche est entièrement intégrée dans le corps creux 3.

La patte flexible 441, portée par l'organe tubulaire 42, peut être moulée de manière monobloc sur l'organe tubulaire 42, ou fixée à celui-ci par tout moyen de fixation connu, tel que le collage.

L'épaulement 300 peut être localisé à un seul endroit du logement 30, ou s'étendre radialement dans le logement 30. Le système de déverrouillage 44 peut comprendre une unique patte flexible 441, qui peut être plus ou moins fine suivant la force que l'on souhaite imposer pour déverrouiller la cartouche 4. Alternativement, le système de déverrouillage 44 peut comprendre une pluralité de pattes flexibles 441, angulairement réparties de manière régulière autour de l'organe tubulaire 42, afin d'augmenter l'effort imposé par rapport à une configuration à une seule patte flexible.

Dans ce deuxième mode de mise en oeuvre, comme illustré sur les figures 2a et 2b, le logement 30 du corps creux 3 et la paroi extérieure de la cartouche 4 peuvent présenter respectivement un premier cran 301 et un premier organe de retenue 45, configurés pour s'emboîter élastiquement l'un dans l'autre, dans la première position de la cartouche 4. Comme déjà évoqué dans la description générale du dispositif de raccordement 1, cela permet de garantir le maintien de la cartouche 4 dans la première position, au cas où une force d'extraction (dans une direction opposée à la direction d'insertion) lui serait appliquée.

Un deuxième cran 302 peut également être présent au niveau du logement 30, pour coopérer avec le premier organe de retenue 45 de manière à bloquer la cartouche 4 dans la deuxième position, dans l'éventualité d'une force appliquée dans la direction d'extraction.

### Troisième mode de mise en oeuvre du dispositif de raccordement

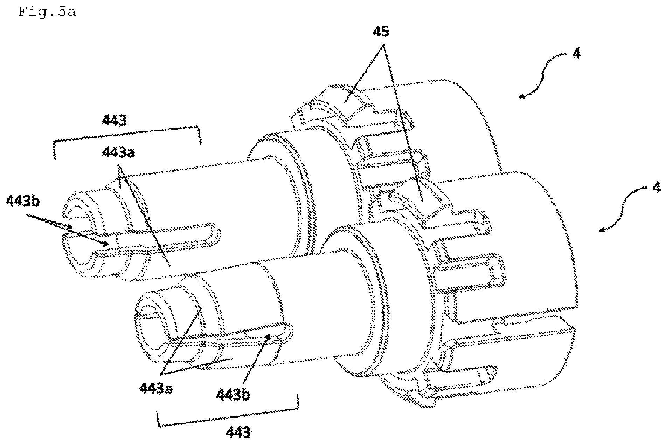

Selon un troisième mode de mise en oeuvre avantageux de l'invention, représenté sur les figures 4 et 5a à 5e, la cartouche 4 comprend, au niveau de la deuxième extrémité 432 du canal intérieur 43, un embout flexible de restriction 443 configuré pour réduire le diamètre dudit canal intérieur 43. Cet embout flexible 443 peut par exemple être formé par deux portions de cylindre 443a en continuité de la paroi de la cartouche 4, et séparées par des rainures longitudinales 443b, qui permettent aux portions 443a de fléchir vers l'axe central de la cartouche 4 et ainsi de restreindre le diamètre du canal intérieur 43 (figure 5a).

Dans ce mode de mise en oeuvre, le système de déverrouillage 44 comprend l'embout flexible de restriction 443, qui va former l'obstacle, et un organe tubulaire interne 32 aménagé dans le corps 3, du côté opposé à son ouverture 31.

Comme illustré sur la figure 5b, la cartouche 4 est verrouillée dans la première position : elle ne peut pas passer dans la deuxième position car l'extrémité de l'embout flexible de restriction 443 se trouve en butée contre l'organe tubulaire interne 32 du corps 3, du fait de sa restriction de diamètre. Lorsque le tube 2 est inséré dans la cartouche 4 (figure 5c), l'embout flexible de restriction 443 est donc en butée et empêche la cartouche 4 de se déplacer selon la direction d'insertion et de quitter la première position ; seul l'élément tubulaire 2 progresse donc à l'intérieur du canal intérieur 43. Lorsque l'élément tubulaire 2 pénètre dans l'embout flexible 443, il provoque progressivement l'écartement de ce dernier. L'embout flexible 443 voit alors le diamètre de son extrémité augmenter, jusqu'à perdre l'appui contre l'organe tubulaire interne 32 du corps 3 : le déverrouillage de la cartouche 4 est effectué (figure 5d). L'élément tubulaire 2 atteint une butée 443c aménagée dans la paroi interne de l'embout flexible 443 : la poursuite de l'insertion du tube 2 entraine alors le passage de la cartouche 4 de la première position à la deuxième position, dans laquelle la cartouche 4 est entièrement intégrée dans le corps creux 3 (figure 5e). Dans la deuxième position, l'élément tubulaire 2 est abouté à l'organe tubulaire interne 32, lequel se trouve entouré par l'extrémité de l'embout flexible 443.

Dans ce troisième mode de mise en oeuvre, comme illustré sur les figures 5a à 5e, le logement 30 du corps creux 3 et la paroi extérieure de la cartouche 4 peuvent présenter respectivement un premier cran 301 et un premier organe de retenue 45, configurés pour s'emboîter élastiquement l'un dans l'autre, de manière à garantir le maintien de la cartouche 4 dans la première position, au cas où une force d'extraction (dans une direction opposée à la direction d'insertion) lui serait appliquée.

Un deuxième cran 302 peut être aménagé dans le logement 30 pour coopérer avec le premier organe de retenue 45 et ainsi bloquer la cartouche 4 dans la deuxième position, dans le sens d'une extraction.

Bien entendu l'invention n'est pas limitée aux modes de mise en oeuvre décrits et on peut y apporter des variantes de réalisation sans sortir du cadre de l'invention tel que défini par les revendications.

En particulier, l'invention n'est aucunement limitée aux exemples de systèmes de déverrouillage présentés, et l'on peut envisager tout système permettant d'assurer, lors de l'insertion de l'élément tubulaire, que l'élément tubulaire puisse traverser la bague d'accrochage et le joint d'étanchéité pendant que la cartouche est verrouillée en première position, puis que la cartouche soit ensuite déverrouillée et puisse se déplacer vers la deuxième position.

Par exemple, on pourrait envisager que le système de déverrouillage soit une patte flexible portée par le corps creux et s'étendant radialement à l'intérieur du logement. Pour constituer un système de déverrouillage, la patte flexible doit alors être suffisamment rigide pour constituer une butée verrouillant la cartouche en première position tant que l'élément tubulaire n'a pas traversé la bague d'accrochage et le joint d'étanchéité. Une fois ces éléments traversés, l'élément tubulaire peut exercer un effort supplémentaire contre une butée formant l'obstacle du canal intérieur, suffisant pour faire fléchir la patte flexible et déverrouiller la cartouche.

## Revendications

1. Dispositif de raccordement (1) d'un élément tubulaire (2), comprenant :
- un corps creux (3) sensiblement cylindrique présentant un logement (30) débouchant sur une ouverture (31), le logement (30) présentant un premier cran (301) ;
- une cartouche (4) verrouillée dans le logement (30) dans une première position, la cartouche (4) dépassant de l'ouverture (31) du corps creux (3) dans la première position, la cartouche (4) présentant une paroi extérieure (40), et une paroi intérieure (41) délimitant un canal intérieur (43), le canal intérieur (43) présentant une première extrémité (431) formant une entrée pour recevoir l'élément tubulaire (2) et une deuxième extrémité (432) munie d'un obstacle, la cartouche (4) comprenant en outre un premier organe de retenue (45) porté par sa paroi extérieure (40) et configuré pour s'emboîter élastiquement dans le premier cran (301), pour maintenir la cartouche (4) dans la première position ;
- un joint d'étanchéité annulaire (5) disposé dans le canal intérieur (43),
- une bague d'accrochage (6) disposée dans le canal intérieur (43), entre l'entrée (431) et le joint d'étanchéité (5), pour assujettir de manière étanche l'élément tubulaire (2) dans le canal intérieur (43) ; le dispositif de raccordement (1) comprenant en outre un système de déverrouillage configuré pour permettre, lorsque l'élément tubulaire (2), inséré dans le canal intérieur (43), exerce une force contre l'obstacle, le déverrouillage de la cartouche (4) et son déplacement de la première position à une deuxième position, dans laquelle la cartouche (4) est entièrement intégrée dans le corps creux (3) .

2. Dispositif de raccordement (1) selon la revendication précédente dans lequel le logement (30) du corps creux (3) présente un deuxième cran (302) et dans lequel la cartouche (4) comprend un deuxième organe de retenue configuré pour s'emboîter élastiquement dans le deuxième cran (302), dans la deuxième position.

3. Dispositif de raccordement (1) selon la revendication 2 dans lequel le premier et le deuxième organes de retenue forment un seul et même organe de retenue (45).

4. Dispositif de raccordement (1) selon la revendication précédente dans lequel le système de déverrouillage comprend l'organe de retenue (45) et le premier cran (301), l'organe de retenue (45) et le premier cran (301) étant alors configurés pour que la force minimale nécessaire, lors de l'insertion de l'élément tubulaire (2), pour libérer l'organe de retenue (45) du premier cran (301) soit supérieure à la force nécessaire pour assujettir de manière étanche l'élément tubulaire (2) dans le canal intérieur (43) .

5. Dispositif de raccordement (1) selon l'une des revendications précédentes dans lequel la cartouche (4) comprend un organe tubulaire (42) interne formant avec la paroi intérieure (41) le canal intérieur (43) tubulaire.

6. Dispositif de raccordement (1) selon la revendication précédente dans lequel le logement (30) du corps creux (3) présente un épaulement (300), et dans lequel le système de déverrouillage (44) comprend l'épaulement (300) et comprend au moins une patte flexible (441) portée par l'organe tubulaire (42) et formant l'obstacle, la patte flexible (441) s'étendant obliquement dans le canal intérieur (43), de manière à rétrécir progressivement ledit canal (43) dans une direction d'insertion, et se terminant par un ergot (442), l'ergot (442) étant en butée contre l'épaulement (300) lorsque la cartouche (4) est dans la première position, la force exercée contre la patte flexible (441) par l'élément tubulaire (2) permettant la libération de l'ergot (442) et le déverrouillage de la cartouche (4).

7. Dispositif de raccordement (1) selon la revendication précédente dans lequel le système de déverrouillage (44) comprend une pluralité de pattes flexibles (441) angulairement réparties de manière régulière.

8. Dispositif de raccordement (1) selon l'une des revendications 1 à 4, dans lequel :
- le corps creux (3) comporte un organe tubulaire interne (32), du côté opposé à son ouverture (31),
- la cartouche (4) comprend un embout flexible de restriction (443) configuré pour réduire le diamètre du canal intérieur (43) à la deuxième extrémité (432), et pour venir en butée contre l'organe tubulaire interne (32) lorsque la cartouche (4) est dans la première position,
- le système de déverrouillage (44) comprend l'embout flexible de restriction (443) qui forme l'obstacle, et l'organe tubulaire interne (32).

9. Dispositif de raccordement (1) selon l'une des revendications précédentes dans lequel la paroi intérieure (41) est munie d'un troisième cran (46) entre l'entrée (431) et la bague d'accrochage (6), et dans lequel le dispositif de raccordement (1) comprend un anneau de maintien (7) de forme sensiblement cylindrique et inséré dans la cartouche (4), l'anneau de maintien (7) présentant un troisième organe de retenue (70) configuré pour s'emboîter élastiquement dans le troisième cran (46) et pour maintenir la bague d'accrochage (6) dans le canal intérieur (43).

10. Dispositif de raccordement (1) selon l'une des revendications précédentes dans lequel le canal intérieur (43) est muni d'un deuxième joint d'étanchéité annulaire disposé entre l'entrée (431) et la bague d'accrochage (6).

11. Dispositif de raccordement (1) selon l'une des revendications précédentes dans lequel la bague d'accrochage (6) présente une section intérieure effilée pour griffer l'élément tubulaire (2) lors de son insertion et empêcher son retrait.

12. Dispositif de raccordement (1) selon l'une des revendications précédentes dans lequel la bague d'accrochage (6) est en métal, préférentiellement en laiton.

13. Dispositif de raccordement (1) selon l'une des revendications précédentes dans lequel la bague d'accrochage (6) présente une forme de C.

14. Dispositif de raccordement (1) selon l'une des revendications précédentes dans lequel la paroi extérieure (40) de la cartouche (4) est munie d'un troisième joint d'étanchéité annulaire (400) pour assurer une étanchéité entre la cartouche (4) et le corps creux (3).

15. Dispositif de raccordement (1) selon l'une des revendications précédentes dans lequel le(s) joint(s) d'étanchéité annulaire(s) (5, 433, 400) est (sont) en caoutchouc.

## Patentansprüche

1. Verbindungsherstellungsvorrichtung (1) eines rohrförmigen Elements (2), umfassend:
- einen im Wesentlichen zylindrischen Hohlkörper (3), der eine Aufnahme (30) aufweist, die auf eine Öffnung (31) mündet, wobei die Aufnahme (30) eine erste Einkerbung (301) aufweist;
- einen auswechselbaren Einsatz (4), der in einer ersten Position in der Aufnahme (30) verriegelt ist, wobei der auswechselbare Einsatz (4) in der ersten Position aus der Öffnung (31) des Hohlkörpers (3) herausragt, wobei der auswechselbare Einsatz (4) eine Außenwand (40) und eine Innenwand (41), die einen Innenkanal (43) begrenzt, aufweist, wobei der Innenkanal (43) ein erstes Ende (431), das einen Einlass für eine Aufnahme des rohrförmigen Elements (2) ausbildet, und ein zweites Ende (432), das mit einer Versperrung versehen ist, aufweist, der auswechselbare Einsatz (4) ferner umfassend ein erstes Rückhaltemittel (45), das durch seine Außenwand (40) getragen wird, und konfiguriert ist, um sich elastisch in die erste Einkerbung (301) einzupassen, um den auswechselbaren Einsatz (4) in der ersten Position beizubehalten;
- einen ringförmigen Dichtungsring (5), der in dem Innenkanal (43) angeordnet ist,
- einen Einhakring (6), der in dem Innenkanal (43) zwischen dem Einlass (431) und dem Dichtungsring (5) angeordnet ist, um das rohrförmige Element (2) in dem Innenkanal (43) abdichtend festzumachen;
die Verbindungsherstellungsvorrichtung (1) ferner umfassend ein Entriegelungssystem, das konfiguriert ist, um, wenn das in den Innenkanal (43) eingeführte rohrförmige Element (2) eine Kraft gegen die Versperrung ausübt, die Entriegelung des auswechselbaren Einsatzes (4) und seine Bewegung aus der ersten Position in eine zweite Position zu ermöglichen, in der der auswechselbare Einsatz (4) vollständig in den Hohlkörper (3) integriert ist.

2. Verbindungsherstellungsvorrichtung (1) nach dem vorstehenden Anspruch, wobei die Aufnahme (30) des Hohlkörpers (3) eine zweite Einkerbung (302) aufweist und wobei der auswechselbare Einsatz (4) ein zweites Rückhaltemittel umfasst, das konfiguriert ist, um sich in die zweite Einkerbung (302) in der zweiten Position elastisch einzupassen.

3. Verbindungsherstellungsvorrichtung (1) nach Anspruch 2, wobei das erste und das zweite Rückhaltemittel ein einziges und selbes Rückhaltemittel (45) ausbilden.

4. Verbindungsherstellungsvorrichtung (1) nach dem vorstehenden Anspruch, wobei das Entriegelungssystem das Rückhaltemittel (45) und die erste Einkerbung (301) umfasst, wobei das Rückhaltemittel (45) und die erste Einkerbung (301) dann so konfiguriert sind, dass die minimale Kraft, die beim Einführen des rohrförmigen Elements (2) erforderlich ist, um das Rückhaltemittel (45) von der ersten Einkerbung (301) zu lösen, größer als die Kraft ist, die erforderlich ist, um das rohrförmige Element (2) in dem Innenkanal (43) abdichtend festzumachen.

5. Verbindungsherstellungsvorrichtung (1) nach einem der vorstehenden Ansprüche, wobei der auswechselbare Einsatz (4) ein inneres rohrförmiges Mittel (42) umfasst, das zusammen mit der Innenwand (41) den rohrförmigen Innenkanal (43) ausbildet.

6. Verbindungsherstellungsvorrichtung (1) nach dem vorstehenden Anspruch, wobei die Aufnahme (30) des Hohlkörpers (3) einen Absatz (300) aufweist, und wobei das Entriegelungssystem (44) den Absatz (300) umfasst, und mindestens eine flexible Lasche (441), die durch das rohrförmige Mittel (42) getragen wird und die Versperrung ausbildet, wobei sich die flexible Lasche (441) schräg in dem Innenkanal (43) erstreckt, sodass sich der Kanal (43) in einer Einführrichtung schrittweise verengt und in einem Vorsprung (442) endet, wobei der Vorsprung (442) an dem Absatz (300) anliegt, wenn der auswechselbare Einsatz (4) in der ersten Position ist, wobei die durch das rohrförmige Element (2) gegen die flexible Lasche (441) ausgeübte Kraft die Freigabe des Vorsprungs (442) und die Entriegelung des auswechselbaren Einsatzes(4) ermöglicht.

7. Verbindungsherstellungsvorrichtung (1) nach dem vorstehenden Anspruch, wobei das Entriegelungssystem (44) eine Vielzahl von winkelig gleichmäßig verteilten flexiblen Laschen (441) umfasst.

8. Verbindungsherstellungsvorrichtung (1) nach einem der vorstehenden Ansprüche 1 bis 4, wobei:
- der Hohlkörper (3) ein inneres rohrförmiges Mittel (32) auf der gegenüberliegenden Seite seiner Öffnung (31) beinhaltet,
- der auswechselbare Einsatz (4) eine flexible Begrenzungsspitze (443) umfasst, die konfiguriert ist, um den Durchmesser des Innenkanals (43) an dem zweiten Ende (432) zu verringern und um an das innere rohrförmige Mittel (32) anzustoßen, wenn sich der auswechselbare Einsatz (4) in der ersten Position befindet,
- wobei das Entriegelungssystem (44) die flexible Begrenzungsspitze (443), die die Versperrung ausbildet, und das innere rohrförmige Mittel (32) umfasst.

9. Verbindungsherstellungsvorrichtung (1) nach einem der vorstehenden Ansprüche, wobei die Innenwand (41) mit einer dritten Einkerbung (46) zwischen dem Einlass (431) und dem Einhakring (6) versehen ist, und wobei die Verbindungsherstellungsvorrichtung (1) einen Haltering (7) umfasst, der im Wesentlichen zylindrisch geformt und in den auswechselbaren Einsatz (4) eingeführt ist, wobei der Haltering (7) ein drittes Rückhaltemittel (70) aufweist, das konfiguriert ist, um sich in die dritte Einkerbung (46) elastisch einzupassen und um den Einhakring (6) in dem Innenkanal (43) beizubehalten.

10. Verbindungsherstellungsvorrichtung (1) nach einem der vorstehenden Ansprüche, wobei der Innenkanal (43) mit einem zweiten ringförmigen Dichtungsring, der zwischen dem Einlass (431) und dem Einhakring (6) angeordnet ist, versehen ist.

11. Verbindungsherstellungsvorrichtung (1) nach einem der vorstehenden Ansprüche, wobei der Einhakring (6) einen verjüngten Innenabschnitt aufweist, um das rohrförmige Element (2) beim Einführen zu kratzen und ein Herausziehen zu verhindern.

12. Verbindungsherstellungsvorrichtung (1) nach einem der vorstehenden Ansprüche, wobei der Einhakring (6) aus Metall, vorzugsweise aus Messing, ist.

13. Verbindungsherstellungsvorrichtung (1) nach einem der vorstehenden Ansprüche, wobei der Einhakring (6) eine C-Form aufweist.

14. Verbindungsherstellungsvorrichtung (1) nach einem der vorstehenden Ansprüche, wobei die Außenwand (40) des auswechselbaren Einsatzes (4) mit einem dritten ringförmigen Dichtungsring (400) versehen ist, um eine Abdichtung zwischen dem auswechselbaren Einsatz (4) und dem Hohlkörper (3) zu sichern.

15. Verbindungsherstellungsvorrichtung (1) nach einem der vorstehenden Ansprüche, wobei der/die ringförmige(n) Dichtungsring(e) (5, 433, 400) aus Gummi ist/sind.

## Claims

1. A coupling device (1) for coupling a tubular element (2), comprising:
- a substantially cylindrical hollow body (3) having a housing (30) that leads into an opening (31), the housing (30) having a first notch (301);
- a cartridge (4) locked in the housing (30) in a first position, the cartridge (4) projecting from the opening (31) of the hollow body (3) in the first position, the cartridge (4) having an outer wall (40) and an inner wall (41) that defines an inner channel (43), the inner channel (43) having a first end (431) that forms an inlet for receiving the tubular element (2) and a second end (432) that is provided with an obstacle, the cartridge (4) further comprising a first retaining member (45) supported on its outer wall (40) and designed to fit elastically into the first notch (301) in order to hold the cartridge (4) in the first position;
- an annular seal (5) arranged in the inner channel (43),
- a fastening ring (6) arranged in the inner channel (43), between the inlet (431) and the seal (5), for sealingly fixing the tubular element (2) in the inner channel (43);
the coupling device (1) further comprising an unlocking system designed to enable the cartridge (4) to be unlocked and moved from the first position to a second position, in which the cartridge (4) is fully integrated in the hollow body (3), when the tubular element (2), inserted in the inner channel (43), exerts a force against the obstacle.

2. The coupling device (1) according the preceding claim, wherein the housing (30) of the hollow body (3) has a second notch (302), and wherein the cartridge (4) comprises a second retaining member designed to fit elastically into the second notch (302) in the second position.

3. The coupling device (1) according to claim 2, wherein the first and the second retaining members form a single retaining member (45).

4. The coupling device (1) according to the preceding claim, wherein the unlocking system comprises the retaining member (45) and the first notch (301), the retaining member (45) and the first notch (301) being designed so that the minimum force necessary, when the tubular element (2) is inserted, to release the retaining member (45) from the first notch (301) is greater than the force necessary to sealingly fix the tubular element (2) in the inner channel (43).

5. The coupling device (1) according to any of the preceding claims, wherein the cartridge (4) comprises an inner tubular member (42) which, together with the inner wall (41), forms the tubular inner channel (43).

6. The coupling device (1) according to the preceding claim, wherein the housing (30) of the hollow body (3) has a shoulder (300), and wherein the unlocking system (44) comprises the shoulder (300) and comprises at least one flexible tab (441) that is supported by the tubular member (42) and forms the obstacle, the flexible tab (441) extending obliquely in the inner channel (43) so as to gradually narrow said channel (43) in an insertion direction, and ending with a lug (442), the lug (442) abutting the shoulder (300) when the cartridge (4) is in the first position, the force exerted against the flexible tab (441) by the tubular element (2) allowing the release of the lug (442) and the unlocking of the cartridge (4).

7. The coupling device (1) according to the preceding claim, wherein the unlocking system (44) comprises a plurality of flexible tabs (441) distributed evenly at an angle.

8. The coupling device (1) according to any of claims 1 to 4, wherein:
- the hollow body (3) comprises an inner tubular member (32) on the side opposite to its opening (31),
- the cartridge (4) comprises a flexible restrictor tip (443) designed to reduce the diameter of the inner channel (43) at the second end (432), and to abut the inner tubular member (32) when the cartridge (4) is in the first position,
- the unlocking system (44) comprises the flexible restrictor tip (443) which forms the obstacle, and the inner tubular member (32).

9. The coupling device (1) according to any of the preceding claims, wherein the inner wall (41) is provided with a third notch (46) between the inlet (431) and the fastening ring (6), and wherein the coupling device (1) comprises a substantially cylindrical retaining ring (7) that is inserted into the cartridge (4), the retaining ring (7) having a third retaining member (70) designed to fit elastically into the third notch (46) and to hold the fastening ring (6) in the inner channel (43).

10. The coupling device (1) according to any of the preceding claims, wherein the inner channel (43) is provided with a second annular seal arranged between the inlet (431) and the fastening ring (6).

11. The coupling device (1) according to any of the preceding claims, wherein the fastening ring (6) has a tapered inner cross-section to grip the tubular element (2) upon its insertion and prevent its removal.

12. The coupling device (1) according to any of the preceding claims, wherein the fastening ring (6) is made of metal, preferably brass.

13. The coupling device (1) according to any of the preceding claims, wherein the fastening ring (6) is C-shaped.

14. The coupling device (1) according to any of the preceding claims, wherein the outer wall (40) of the cartridge (4) is provided with a third annular seal (400) to ensure a seal between the cartridge (4) and the hollow body (3).

15. The coupling device (1) according to any of the preceding claims, wherein the annular seal(s) (5, 433, 400) is (are) made of rubber.
